# EUROPÄISCHE PATENTSCHRIFT

(11) **EP 1 018 458 B1**
(45) Veröffentlichungstag und Bekanntmachung des Hinweises auf die Patenterteilung: **01.10.2003**
(21) Anmeldenummer: 99123059.0
(22) Anmeldetag: 20.11.1999
(51) Int. Cl.: B60T 7/22

(54) **Verfahren und Vorrichtung zur Abbremsung eines Kraftfahrzeugs im Nahbereich mit einem Hindernis**
Method and device for braking a motor vehicle at close distance to an obstacle
Procédure et dispositif pour le freinage d'une automobile à courte distance d'un obstacle

(30) Priorität: 07.01.1999 DE 19900314
(43) Veröffentlichungstag der Anmeldung: 12.07.2000
(73) Patentinhaber: DaimlerChrysler AG, 70567 Stuttgart (DE)
(72) Erfinder: Kurz, Gerhard, 73240 Wendlingen (DE); Müller, Armin, 75391 Gechingen (DE); Röhrig-Gericke, Thomas, 71254 Ditzingen (DE); Schöb, Reinhold, 71126 Gäufelden (DE); Tröster, Harry, Dr., 71732 Tamm (DE)

(56) Entgegenhaltungen:
- DE-A- 4 310 354
- DE-A- 19 647 430
- GB-A- 2 310 731

## Beschreibung

Die Erfindung betrifft ein Verfahren und -eine Vorrichtung zur Abbremsung eines Kraftfahrzeugs im Nahbereich mit einem Hindernis nach dem Oberbegriff des Anspruches 1 bzw. 11, seihe das Dokument GB-A-2 310 731.

Aus der Druckschrift DE 43 10 354 A1 ist ein automatisches Bremssteuerungssystem für ein Fahrzeug bekannt, welches automatisch eine Bremskraft erzeugt, falls die Entfernung und/oder die Relativgeschwindigkeit zwischen dem Fahrzeug und einem vorausfahrenden Fahrzeug unter einen bestimmten Grenzwert abfällt. Hierzu werden der Abstand und die Geschwindigkeiten beider Fahrzeuge ermittelt und in einer Berechnungseinrichtung mit vorgegebenen Grenzwerten verglichen. Falls der gemessene Abstand bzw. die Relativgeschwindigkeit die Grenzwerte unterschreiten, werden in einer Steuereinrichtung zum Steuern der Bremseinrichtung Bremssignale erzeugt, über die das Fahrzeug so weit abgebremst wird, bis der geforderte Abstand bzw. die Relativgeschwindigkeit wieder hergestellt ist.

Aus dieser Druckschrift geht aber nicht hervor, wie Bremsvorgänge im Nahbereich bei kleinen Abständen und Relativgeschwindigkeiten zwischen dem Fahrzeug und dem Hindernis optimiert werden können. Bei derartigen Fahrmanövern - beispielsweise beim Einparken - besteht das Problem, daß aufgrund des geringen Abstandes, der gegebenenfalls wenige Zentimeter betragen kann, eine schnelle Fahrerreaktion für den Wechsel von Gaspedal zu Bremspedal gefordert ist, um Kollisionen mit dem Hindernis zu vermeiden. Bei beengten Platzverhältnissen ist es oftmals erforderlich, das Fahrzeug mit geringstem Abstand zum Hindernis zu manövrieren, wobei trotz der üblicherweise bei diesen Manövern geringen Geschwindigkeit bereits eine geringfügig verzögerte Reaktion des Fahrers zu Schäden führen kann. Nicht auszuschließen sind außerdem Fehl- und Panikreaktionen des Fahrers, beispielsweise zu kräftige Pedalbeaufschlagungen, die eine vom Fahrer nicht gewünschte Fahrzeugbewegung bewirken und auch größere Schäden hervorrufen können.

Der Erfindung liegt das Problem zugrunde, die Reaktionszeit beim langsamen Heranfahren an ein Hindernis zu minimieren.

Dieses Problem wird erfindungsgemäß mit den Merkmalen des Anspruches 1 bzw. 11 gelöst.

Gemäß dem neuartigen Verfahren wird das Heranfahren an ein Hindernis in Abhängigkeit des Abstandes zwischen Fahrzeug und Hindernis in zwei Phasen unterteilt. In der ersten Phase befindet sich das Fahrzeug zwar in naher Entfernung zum Hindernis, der Abstand ist aber noch groß genug um das Fahrzeug mit kleiner Geschwindigkeit rollen zu lassen. In dieser Phase liegt der Abstand zwischen Fahrzeug und Hindernis zwischen zwei gegebenen oder berechneten Grenzwerten, der Nahgrenze, bei deren Unterschreiten die erste Phase beginnt, und der Stoppgrenze, bei deren Unterschreiten die zweite Phase beginnt, in der das Fahrzeug in seine endgültige Position gebracht und die Fahrzeuggeschwindigkeit üblicherweise auf Null reduziert wird.

In der ersten Phase werden nach dem Unterschreiten der Nahgrenze - sofern auch die Fahrzeuggeschwindigkeit einen gegebenen oder berechneten Schwellenwert unterschreitet - sowohl das das Fahrzeug verzögernde Bremsmoment als auch das beschleunigende Motormoment auf Werte größer Null eingestellt, jedoch unter der zusätzlichen Bedingung, daß der Wert des Motormomentes den Wert des Bremsmomentes übersteigt. Das Fahrzeug wird in dieser Phase von gegensinnigen Momenten beaufschlagt; aufgrund des größeren Motormoments bleibt das Fahrzeug aber in Bewegung und es wird ein Stillstand des Fahrzeugs vor dem Erreichen der endgültigen Position verhindert. Zugleich wird aber die Bremse bereits angelegt.

Da in der ersten Phase sowohl ein Bremsmoment als auch ein Motormoment auf das Fahrzeug wirken, werden Reaktionszeiten der Bremsanlage und des Motors auf Änderungen im Brems- bzw. Motormoment auf ein Minimum beschränkt, da keine Verzögerungen durch Trägheit und keine Übertragungszeitverluste entstehen. Das Fahrzeug reagiert spontaner und außerdem können die gegebenen äußeren Platzverhältnisse optimal ausgenutzt werden.

Durch weitere Annäherung des Fahrzeugs an das Hindernis wird die Stoppgrenze unterschritten, es beginnt die zweite Phase. In der zweiten Phase kehrt sich das qualitative Verhältnis zwischen Bremsmoment und Motormoment um. Das Bremsmoment übersteigt nun das Motormoment, mit der Folge, daß die Fahrzeuggeschwindigkeit verringert und eine Kollision mit dem Hindernis vermieden wird. Die Umkehr des Verhältnisses von Bremsmoment und Motormoment kann entweder durch Erhöhung des Bremsmomentes oder durch Reduzierung des Motormomentes oder durch eine Kombination von beidem erreicht werden, wobei die Entscheidung, ob ein Eingriff in die Bremsanlage oder ein Eingriff in das Motormanagement zur Einstellung des Motor-Antriebsmoments erfolgt, von Parametern und Zustandsgrößen wie verbleibender Abstand, Relativgeschwindigkeit, Relativverzögerung, Art und Größe des Hindernisses, Typ des Fahrmanövers, vorgegebener Bremsfunktion etc. abhängig gemacht werden kann.

Sowohl ein Änderungseingriff in die Radbremsanlage als auch ein Änderungseingriff in die Motorsteuerung kann in kürzestmöglicher Zeit erfolgen, weil bereits beide Komponenten mit Brems- bzw. Motormoment beaufschlagt sind und daher keine Verzögerungen beim Aufbau einer Momentenart entstehen. Dadurch können insbesondere Fahrmanöver im Nahbereich, beispielsweise Einparkvorgänge, die ein Abbremsen des Fahrzeugs bei einem geringem Abstand zu Hindernissen erforderlich machen, optimiert durchgeführt werden. Es ist möglich, kontinuierliche Abbremsungen bis zum Stillstand des Fahrzeugs unter Vermeidung von Verzögerungssprüngen bzw. -rucken und zugleich bestmöglicher Raumausnutzung durchzuführen. Die gleichmäßige Verzögerung hilft unerwünschte Fahrerreaktionen zu vermeiden. Außerdem kann in Fahrzeugen mit Brake-by-Wire-Systemen ein automatischer und vom Fahrer unbemerkter Bremseneingriff vorgenommen werden, wobei der vom Fahrer über das Bremspedal erzeugte Bremsdruck durch einen automatisch erzeugten Bremsdruck verstärkt oder abgemildert werden kann.

In zweckmäßiger Weiterbildung des Verfahrens werden in der ersten Phase im Abstandsbereich zwischen Nahgrenze und Stoppgrenze das Bremsmoment und das Motormoment derart eingestellt, daß das Fahrzeug sich mit konstanter Geschwindigkeit bewegt, die insbesondere während des Einparkens in einem Geschwindigkeitsbereich bis maximal etwa 5 km/h liegt.

In einer bevorzugten Ausführung wird ein System zur Hinderniserkennung eingesetzt, das Größe und Typ eines Hindernisses erkennen kann und in Abhängigkeit dieser Parameter einen Lenkeinschlag bzw. einen Lenkwinkelverlauf berechnet, um dem betreffenden Hindernis auszuweichen oder unter Berücksichtigung des Hindernisses eine optimale Fahrfunktion zu realisieren. Der Lenkeinschlag bzw. der Lenkwinkelverlauf kann entweder dem Fahrer optisch und/oder akustisch angezeigt werden oder automatisch mit Hilfe von Stellelementen vorgenommen werden. In letzterem Fall kann es zweckmäßig sein, den vom Fahrer ausgeführten Lenkwinkeleingriff zu verstärken oder abzumildern, um das Fahrzeug der optimalen, errechneten Funktion folgen zu lassen. Sowohl beim Bremseingriff als auch beim Lenkwinkeleingriff kann es vorteilhaft sein, die Abweichung von dem vom Fahrer vorgegebenen Wert nur innerhalb vorgegebener Grenzen zuzulassen, um dem Fahrer die endgültige Entscheidung über das Fahrzeugverhalten zu überlassen und ihm außerdem aus Sicherheitsgründen das Gefühl zu vermitteln, die Fahrzeugreaktionen seien ausschließlich auf seine Vorgaben zurückzuführen.

Gemäß einer vorteilhaften Vorrichtung, die sich insbesondere zur Durchführung des neuen Verfahrens eignet, sind Einrichtungen zur Ermittlung des Abstandes und zur Ermittlung der Relativgeschwindigkeit zwischen dem Fahrzeug und dem Hindernis vorgesehen. Weiterhin umfaßt die Vorrichtung eine Regel- und Steuerungseinrichtung zur Ermittlung einer optimalen Bremsstrategie, eine Bremsen-Betätigungseinrichtung zur fahrerunabhängigen Betätigung einer Bremsanlage sowie gegebenenfalls einen Lenkwinkelsensor einschließlich Stellelement zur Einstellung des Lenkwinkels.

In den Einrichtungen zur Ermittlung des Abstandes und der Relativgeschwindigkeit werden entsprechende Signale generiert, die der Regel- und Steuerungseinrichtung als Eingangssignale zur Weiterverarbeitung zuführbar sind. In der Regel- und Steuerungseinrichtung werden diese Eingangssignale mit Signalen verglichen, die Schwellenwerte für den Abstand und die Relativgeschwindigkeit repräsentieren. Sind beide Eingangssignale kleiner als die zugeordneten Schwellenwerte, so nähert sich das Fahrzeug dem Hindernis mit niedriger Geschwindigkeit und befindet sich bereits im Nahbereich zu dem Hindernis. Es werden daraufhin in der Regel- und Steuerungseinrichtung Stellsignale erzeugt, die sowohl das Motormoment über das Motormanagement als auch das Bremsmoment über die Bremsen-Betätigungseinrichtung beeinflussen, wobei beide Momente auf einen Wert größer als Null eingestellt werden, das Bremsmoment jedoch auf einen kleineren Wert als das Motormoment.

Der Abstand zwischen dem Fahrzeug und dem Hindernis wird fortlaufend in zweckmäßig periodischen Abständen ermittelt. Unterschreitet der Abstand die Stoppgrenze, erzeugt die Regel- und Steuerungseinrichtung weitere Stellsignale, die bewirken, daß nun das Bremsmoment das Motormoment übersteigt, woraufhin das Fahrzeug weiter abgebremst wird, gegebenenfalls bis zum Stillstand.

Bei den Einrichtungen zur Abstands- und Relativgeschwindigkeitsermittlung handelt es sich um Radar-, Infrarot- oder Lasereinrichtungen oder dergleichen. Insbesondere für die Lenkwinkelvorgabe kann als weitere Einrichtung ein Bilderkennungssystem vorgesehen sein.

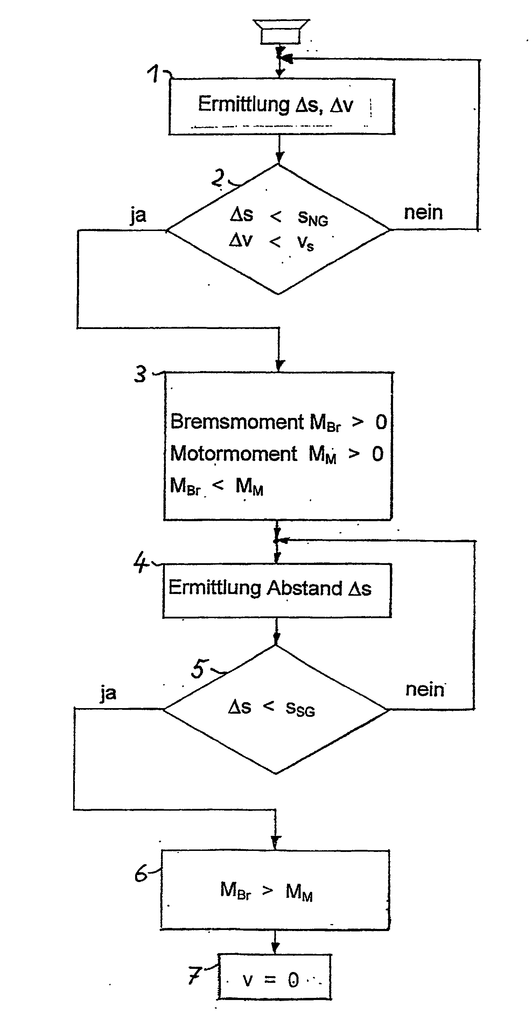

Weitere Vorteile und zweckmäßige Ausführungsformen sind den weiteren Ansprüchen, der Figurenbeschreibung und der Zeichnung zu entnehmen, in der ein Ablaufdiagramm zur Abbremsung eines Fahrzeugs vor einem Hindernis dargestellt ist.

Gemäß Schritt 1 werden zunächst der Abstand Δs und die Relativgeschwindigkeit Δv zwischen dem Fahrzeug und dem Hindernis gemessen. In einem nachfolgenden Schritt 2 wird der gemessene Abstand Δs mit einem Grenzwert S_{NG} verglichen, der eine Nahgrenze repräsentiert, bei deren Unterschreiten weitere Maßnahmen ausgelöst werden. Der Grenzwert S_{NG} kann für alle oder für bestimmte Situationen fest vorgegeben oder berechnet werden. Es kann beispielsweise für alle Einpark-Manöver ein bestimmter Grenzwert S_{NG} festgelegt werden. Zugleich wird im Schritt 2 die Relativgeschwindigkeit Δv mit einem Schwellenwert Vₛ verglichen.

Die Entscheidung, welches Manöver aktuell ausgeführt wird, kann auf der Grundlage von sensorisch oder rechnerisch oder manuell ermittelten oder eingegebenen Parametern und Zustandsgrößen getroffen werden, beispielsweise durch Vergleich der in Bilderkennungssystemen aufgenommenen Daten mit Referenzdaten oder ähnliches.

Für den Fall, daß bei dem in Schritt 2 vorgenommenen Vergleich festgestellt wird, daß der Abstand Δs noch nicht unterhalb der Nahgrenze S_{MG} liegt und/oder die Relativgeschwindigkeit Δv noch nicht unter den Schwellenwert Vₛ gesunken ist, wird zu Schritt 1 zurückgekehrt und in regelmäßigen periodischen Abständen eine erneute Abstands- und Relativgeschwindigkeitsmessung durchgeführt.

Falls der Abstand Δs unter die Nahgrenze S_{NG} und außerdem die Relativgeschwindigkeit Δv unter den Schwellenwert Vₛ fällt, werden die in Schritt 3 gezeigten Folgen ausgelöst.

Abstand und Relativgeschwindigkeit werden als kumulativ zu erfüllende Kriterien für die Auslösung der in Schritt 3 gezeigten Maßnahmen behandelt. Es kann gegebenenfalls aber auch zweckmäßig sein, nur den Abstand als Auslösekriterium für weitere Schritte zu berücksichtigen.

Gemäß Schritt 3 werden das über die Bremsanlage ausgeübte Bremsmoment M_{Br} und das das Fahrzeug in Fahrtrichtung beaufschlagende Motormoment M_{M}, welches sich additiv aus motorisch erzeugtem Antriebsmoment und geländebedingtem Schubmoment zusammensetzt, in der Weise aufeinander abgestimmt, daß sowohl das Bremsmoment M_{Br} als auch das Motormoment M_{M} einen Wert größer als Null einnehmen und das Motormoment das Bremsmoment übersteigt. Je nach Ausgangswerten des Motormoments und des Bremsmoments können beide Momente soweit verringert oder erhöht werden, bis die vorgenannten Bedingungen erfüllt sind.

Da das Motormoment M_{M} das Bremsmoment M_{Br} übersteigt, bewegt sich das Fahrzeug kontinuierlich. Der Schwellenwert der Relativgeschwindigkeit zwischen Fahrzeug und Hindernis und das Verhältnis von Bremsmoment zu Motormoment werden derart gewählt, daß das Fahrzeug nach dem Unterschreiten der Nahgrenze S_{NG} sich mit gleichmäßiger, konstanter Geschwindigkeit fortbewegt, wobei die Fahrzeuggeschwindigkeit zweckmäßig auf einen kleinen Wert, beispielsweise etwa 5 km/h, festgesetzt wird.

Nach Einstellung der auf das Fahrzeug wirkenden Momente wird in einem nächsten Schritt 4 erneut der Abstand Δs zwischen Fahrzeug und Hindernis überprüft und in einem folgende Schritt 5 mit einem weiteren berechneten oder vorgegebenen Grenzwert, der Stoppgrenze S_{SG}, verglichen. Die Stoppgrenze S_{SG} markiert einen geringeren Abstand des Fahrzeuges zum Hindernis als die Nahgrenze S_{NG}. Die Stoppgrenze bezeichnet denjenigen Abstand, ab dem Maßnahmen zur weiteren Reduzierung der Fahrzeuggeschwindigkeit bis gegebenenfalls zum Stillstand des Fahrzeugs eingeleitet werden.

Falls bei dem Vergleich gemäß Schritt 5 festgestellt wird, daß der Abstand Δs die Stoppgrenze s_{SG} noch nicht unterschritten hat, so befindet sich das Fahrzeug nach wie vor im Abstandsbereich zwischen Nahgrenze S_{NG} und S_{SG} und es wird zu Schritt 4 zurückgekehrt, in dem in periodischen Schritten weitere Abstandsmessungen durchgeführt werden. Falls der Abstand Δs die Stoppgrenze S_{SG} unterschreitet, werden gemäß Schritt 6 das Bremsmoment M_{Br} und das Motormoment M_{M} soweit erhöht, bis das Bremsmoment M_{Br} das Motormoment M_{M} übersteigt und folglich die Geschwindigkeit weiter reduziert wird. In Schritt 7 endet das Verfahren, die Fahrzeuggeschwindigkeit v beträgt Null.

Sowohl die in der ersten Phase des Verfahrens gemäß Schritt 3 als auch die in der zweiten Phase des Verfahrens gemäß Schritt 6 durchzuführende Anpassung der Momente kann durch Erhöhung und/oder Absenkung der jeweiligen Momente erfolgen. Die Momentenanpassung erfolgt innerhalb vorgegebener Grenzen insbesondere unabhängig von der Fahrerreaktion, um ein in Hinblick auf Sicherheit und Fahrkomfort optimales Annähern an das Hindernis bzw. Umfahren des Hindernisses zu gewährleisten.

Es kann weiterhin eine Einrichtung zur fahrerunabhängigen Lenkwinkeleinstellung vorgesehen sein, das vorteilhäft mit einem System zur Hinderniserkennung gekoppelt ist. Die Einrichtung zur Lenkwinkeleinstellung ermöglicht es in Kombination mit dem Abstands- und Relativgeschwingkeits-Erkennungssystem, Hindernissen automatisch auszuweichen, welche sich in dem vom Fahrer eingeschlagenen oder vom Rechner ermittelten Fahrweg befinden.

## Patentansprüche

1. Verfahren zur Abbremsung eines Kraftfahrzeugs bei kleinen Geschwindigkeiten zur Vermeidung einer Kollision im Nahbereich mit einem Hindernis, wobei der Abstand (Δs) und die Relativgeschwindigkeit (Δv) zwischen dem Fahrzeug und dem Hindernis sensorisch ermittelt und der Berechnung eines erforderlichen Bremsdruckes oder einer Verzögerung zugrunde gelegt werden und der Bremsdruck zumindest teilweise fahrerunabhängig erzeugt wird,
**dadurch gekennzeichnet,**
**daß**
- für den Fall, daß die Relativgeschwindigkeit (Δv) einen Schwellenwert (Vₛ) und der Abstand (Δs) eine Nahgrenze (S_{NG}) unterschreiten, das Bremsmoment (M_{Br}) und das aus Motor-Antriebsmoment und Schubmoment zusammengesetzte Motormoment (M_{M}) in der Weise eingestellt werden, daß sowohl das Bremsmoment (M_{Br}) als auch das Motormoment (M_{M}) größer als Null sind, wobei das Bremsmoment (M_{Br}) kleiner als das Motormoment (M_{M}) ist;
- für den Fall, daß der Abstand (Δs) eine Stoppgrenze (S_{SG}), welche kleiner ist als die Nahgrenze (S_{NG}), unterschreitet, das Bremsmoment (M_{Br}) und das Motormoment (M_{M}) in der Weise eingestellt werden, daß das Bremsmoment (M_{Br}) das Motormoment (M_{M}) übersteigt.

2. Verfahren nach Anspruch 1,
**dadurch gekennzeichnet,**
**daß** im Abstandsbereich zwischen Nahgrenze (S_{NG}) und Stoppgrenze (S_{SG}) das Bremsmoment (M_{Br}) und das Motormoment (M_{M}) so eingestellt werden, daß das Fahrzeug sich mit konstanter Geschwindigkeit (v) bewegt.

3. Verfahren nach Anspruch 2,
**dadurch gekennzeichnet,**
**daß** die Fahrzeuggeschwindigkeit (v) auf einen Wert von maximal etwa 5 km/h eingestellt wird.

4. Verfahren nach einem der Ansprüche 1 bis 3,
**dadurch gekennzeichnet,**
**daß** im Abstandsbereich unterhalb der Stoppgrenze (S_{SG}) das Bremsmoment (M_{Br}) erhöht und/oder das Motormoment (M_{M}) reduziert wird.

5. Verfahren nach Anspruch 4,
**dadurch gekennzeichnet,**
**daß** das Fahrzeug bis zum Stillstand abgebremst wird.

6. Verfahren nach einem der Ansprüche 1 bis 5,
**dadurch gekennzeichnet,**
**daß** ein System zur Hinderniserkennung eingesetzt wird und in Abhängigkeit des erkannten Hindernisses ein Lenkeinschlag ermittelt wird.

7. Verfahren nach Anspruch 6,
**dadurch gekennzeichnet,**
**daß** der Lenkeinschlag automatisch vorgenommen wird.

8. Verfahren nach Anspruch 6 oder 7,
**dadurch gekennzeichnet,**
**daß** als System zur Hinderniserkennung ein Radarsystem verwendet wird.

9. Verfahren nach einem der Ansprüche 6 bis 8,
**dadurch gekennzeichnet,**
**daß** als System zur Hinderniserkennung ein Bildverarbeitungssystem verwendet wird.

10. Verfahren nach einem der Ansprüche 6 bis 9,
**dadurch gekennzeichnet,**
**daß** als System zur Hinderniserkennung ein Infrarotsensor eingesetzt wird.

11. Vorrichtung zur Abbremsung eines Kraftfahrzeugs bei kleinen Geschwindigkeiten zur Vermeidung einer Kollision im Nahbereich mit einem Hindernis, insbesondere Vorrichtung zur Durchführung des Verfahrens nach einem der Ansprüche 1 bis 10, mit Einrichtungen zur Ermittlung des Abstandes (Δs) zwischen dem Fahrzeug und dem Hindernis und zur Ermittlung der Relativgeschwindigkeit (Δv), mit einer Regel- und Steuerungseinrichtung zur Ermittlung einer optimalen Bremsstrategie, und mit einer Bremsen-Betätigungseinrichtung zur fahrerunabhängigen Betätigung einer Bremsanlage,
**dadurch gekennzeichnet,**
- **daß** in der Regel- und Steuerungseinrichtung ein der Relativgeschwindigkeit (Δv) entsprechendes Signal mit einem einem Schwellenwert (Vₛ) entsprechenden Signal und ein dem Abstand (Δs) entsprechendes Signal mit einem einer Nahgrenze (S_{NG}) entsprechenden Signal vergleichbar ist,
- **daß** für den Fall, daß das der Relativgeschwindigkeit (Δv) entsprechende Signal kleiner ist als oder gleich ist wie das dem Schwellenwert (Vₛ) entsprechende Signal und daß das dem Abstand (Δs) entsprechende Signal kleiner ist als oder gleich ist wie das der Nahgrenze (S_{NG}) entsprechende Signal Stellsignale zur Einstellung des Bremsmoments (M_{Br}) und des Motormoments (M_{M}) erzeugbar sind, wobei
• die Stellsignale der Bremsen-Betätigungseinrichtung und einem das Motormoment (M_{M}) beeinflussenden Motormanagement zuführbar sind und
• die Stellsignale das Bremsmoment (M_{Br}) und das Motormoment (M_{M}) auf Werte größer als Null einstellen, jedoch das Bremsmoment (M_{Br}) auf einen Wert, welcher kleiner ist als der Wert des Motormoments (M_{M}),
- daß ein dem Abstand (Δs) entsprechendes Signal mit einem einer Stoppgrenze (S_{SG}) entsprechenden Signal vergleichbar ist,
- daß für den Fall, daß das dem Abstand (Δs) entsprechende Signal kleiner ist als oder gleich ist wie das der Stoppgrenze (S_{SG}) entsprechende Signal weitere Stellsignale für die Bremsen-Betätigungseinrichtung und das Motormoment (M_{M}) erzeugbar sind, wobei das Bremsmoment (M_{Br}) und das Motormoment (M_{M}) derart beeinflusst werden, daß das Bremsmoment (M_{Br}) das Motormoment (M_{M}) übersteigt.

12. Vorrichtung nach Anspruch 11,
**dadurch gekennzeichnet,**
ein Lenkwinkelsensor zur Ermittlung des aktuellen Lenkwinkels und ein System zur Hinderniserkennung vorgesehen sind, wobei aus den im Lenkwinkelsensor und im Hinderniserkennungs-System erzeugten Signalen in Zusammenhang mit den in den Einrichtungen zur Ermittlung des Abstandes zwischen dem Fahrzeug und dem Hindernis und zur Ermittlung der Relativgeschwindigkeit erzeugten Signalen Stellsignale zur Bremsung und Lenkung erzeugbar sind.

## Claims

1. A process for braking a motor vehicle at low speeds in order to avoid a collision in proximity to an obstacle, the distance (Δs) and the relative speed (Δv) between the vehicle and the obstacle being determined by sensor and used as the basis for the calculation of a necessary brake pressure or a delay, and the brake pressure being generated independently of the driver in part at least,
**characterised in that**
- in the event that the relative speed (Δv) falls below a threshold value (vs) and the distance (Δs) falls below a proximity limit (S_{NG}), the braking torque (M_{Br}) and the engine torque (M_{M}) which is composed of the engine driving torque and the pushing torque are set such that both the braking torque (M_{Br}) and the engine torque (M_{M}) are greater than zero, the braking torque (M_{Br}) being less than the engine torque (M_{M})_{,}
- in the event that the distance (Δs) falls below a stop limit (S_{SG}) which is less than the proximity limit (S_{NG}), the braking torque (M_{Br}) and the engine torque (M_{M}) are set such that the braking toque (M_{Br}) exceeds the engine torque (M_{M}).

2. A process in accordance with claim 1,
**characterised in that**
in the distance range between the proximity limit (S_{NG}) and the stop limit (S_{SG}) the braking torque (M_{Br}) and the engine torque (M_{M}) are set such that the vehicle moves at a constant speed (v).

3. A process in accordance with claim 2,
c**haracterised in that**
the vehicle speed (v) is set to value of no more than approx. 5 km/h.

4. A process in accordance with claims 1 to 3,
**characterised in that**
in the distance range below the stop limit (s_{SG}) the braking torque (M_{Br}) is increased and/or the engine torque (M_{M}) is reduced.

5. A process in accordance with claim 4,
**characterised in that**
the vehicle is braked until it reaches a standstill.

6. A process in accordance with one of claims 1 to 5,
**characterised in that**
an obstacle detection system is used and a steering angle is determined dependent upon the obstacle identified.

7. A process in accordance with claim 6,
**characterised in that**
the steering angle is set automatically.

8. A process in accordance with claim 6 or 7,
**characterised in that**
a radar system is used as the obstacle detection system.

9. A process in accordance with one of claims 6 to 8,
**characterised in that**
an image processing system is used as the obstacle detection system.

10. A process in accordance with one of claims 6 to 9,
**characterised in that**
an infrared sensor is used as the obstacle detection system.

11. A device for braking a motor vehicle at low speeds in order to a void a collision in proximity to an obstacle, in particular a device for carrying out the process as disclosed in one of claims 1 to 10, having devices to determine the distance (Δs) between the vehicle and the obstacle and to determine the relative speed (Δv), having an automatic control device to determine an optimum braking strategy, and having a brake actuating device to actuate a braking system independently of the driver,
**characterised in that**
- in the automatic control device a signal corresponding to the relative speed (Δv) is compared with a signal corresponding to a threshold value (vs) and a signal corresponding to the distance (Δs) is compared with a signal corresponding to a proximity limit (S_{NG}),
- in the event that the signal corresponding to the relative speed (Δv) is less than or equal to the signal corresponding to the threshold value (vs) and the signal corresponding to the distance (Δs) is less than or equal to the signal corresponding to the proximity limit (S_{NG}), it is possible to generate adjusting signals to set the braking torque (M_{Br}) and the engine torque (M_{M}),
· it being possible to feed the adjusting signals to the brake actuating device and to an engine management system affecting engine torque (M_{M}) and
· the adjusting signals setting the braking torque (M_{Br}) and the engine torque (M_{M}) to values greater than zero, but the braking torque (M_{Br}) to a value which is less than the value of the engine torque (M_{M}),
- it is possible to compare a signal corresponding to the distance (Δs) with a signal corresponding to a stop limit (S_{SG}),
- in the event that the signal corresponding to the distance (Δs) is less than or equal to the signal corresponding to the stop limit (S_{SG}), it is possible to generate further adjusting signals for the brake actuating device and the engine torque (M_{M}), the braking torque (M_{Br}) and the engine torque (M_{M}) being influenced in such a manner that the braking torque (M_{Br}) exceeds the engine torque (M_{M}).

12. A process in accordance with claim 11,
**characterised in that**
a steering angle sensor to determine the current steering angle and an obstacle detection system are provided, it being possible to generate adjusting signals for braking and steering from the signals generated in the steering angle sensor and in the obstacle detection system in conjunction with the signals generated in the devices for determining the distance between the vehicle and the obstacle and for determining the relative speed.

## Revendications

1. Procédé pour freiner un véhicule automobile à petite vitesse pour éviter une collision dans la zone proche avec un obstacle, la distance (Δs) et la vitesse relative (Δv) entre le véhicule et l'obstacle étant déterminées par des capteurs pour servir de base au calcul d'une pression de freinage nécessaire ou d'une temporisation, et la pression de freinage étant du moins en partie produite indépendamment du conducteur,
**caractérisé en ce que**
- dans le cas où la vitesse relative (Δv) est inférieure à une valeur seuil (Vₛ) et la distance (Δs) est inférieure à une limite proche (s_{NG}), le couple de freinage (M_{Br}) et le couple du moteur (M_{M}), composé du couple d'entraînement du moteur et du couple de poussée, sont réglés de telle sorte qu'aussi bien le couple de freinage (M_{Br}) que le couple du moteur (M_{M}) sont supérieurs à zéro, le couple de freinage (M_{Br}) étant inférieur au couple du moteur (M_{M}) ;
- qu'au cas où la distance (Δs) est inférieure à une limite d'arrêt (s_{SG}) qui est plus petite que la limite proche (s_{NG}), le couple de freinage (M_{Br}) et le couple du moteur (M_{M}) sont réglés de telle sorte que le couple de freinage (M_{Br}) dépasse le couple du moteur (M_{M}).

2. Procédé selon la revendication 1, **caractérisé en ce que** dans la zone de distance entre la limite proche (s_{NG}) et la limite d'arrêt (s_{SG}) le couple de freinage (M_{Br}) et le couple du moteur (M_{M}) sont réglés de telle sorte, que le véhicule se déplace à vitesse (v) constante.

3. Procédé selon la revendication 2, **caractérisé en ce que** la vitesse (v) du véhicule est réglée Sur une valeur d'environ 5 km/h au maximum.

4. Procédé selon l'une quelconque des revendications 1 à 3, **caractérisé en ce que** dans la zone de distance en dessous de la limite d'arrêt (s_{SG}) le couple de freinage (M_{Br}) est augmenté et/ou le couple du moteur (M_{M}) est réduit.

5. Procédé selon la revendication 4, **caractérisé en ce que** le véhicule est freiné jusqu'à l'arrêt.

6. Procédé selon l'une des revendications 1 à 5, **caractérisé en ce que** l'on utilise un système de détection d'obstacles, et qu'un braquage de direction est déterminé en fonction de l'obstacle détecté.

7. Procédé selon la revendication 6, **caractérisé en ce que** le braquage de direction est effectué automatiquement.

8. Procédé selon la revendication 6 ou 7, **caractérisé en ce que** l'on utilise un système radar pour la détection d'obstacles.

9. Procédé selon l'une quelconque des revendications 6 à 8, **caractérisé en ce que** l'on utilise un système de traitement d'images pour la détection d'obstacles.

10. Procédé selon l'une quelconque des revendications 6 à 9, **caractérisé en ce que** l'on utilise un capteur infrarouge pour la détection d'obstacles.

11. Dispositif pour freiner un véhicule automobile à petite vitesse pour éviter une collision dans la zone proche avec un obstacle, notamment dispositif pour la mise en oeuvre du procédé selon l'une quelconque des revendications 1 à 10, comprenant des installations pour déterminer la distance (Δs) entre le véhicule et l'obstacle et pour déterminer la vitesse relative (Δv), comprenant une installation de régulation et de commande pour déterminer une stratégie de freinage optimale, et comprenant une installation d'actionnement du frein pour actionner une installation de freinage indépendamment du conducteur,
**caractérisé en ce que**
- l'installation de régulation et de commande permet de comparer un signal correspondant à la vitesse relative (Δv) à un signal correspondant à une valeur seuil (Vₛ) et un signal correspondant à la distance (Δs) à un signal correspondant à une limite proche (s_{NG}),
- dans le cas où le signal correspondant à la vitesse relative (Δv) est plus petit ou égal au signal correspondant à la valeur seuil (Vₛ) et où le signal correspondant à la distance (Δs) est plus petit ou égal au signal correspondant à la limite proche (s_{NG}), des signaux de réglage pour régler le couple de freinage (M_{Br}) et le couple du moteur (M_{M}) peuvent être générés,
. les signaux de réglage pouvant être transmis à l'installation d'actionnement du frein et à une gestion de moteur influençant le couple du moteur (M_{M}), et
. les signaux de réglage réglant le couple de freinage (M_{Br}) et le couple du moteur (M_{M}) sur des valeurs supérieures à zéro, mais le couple de freinage (M_{Br}) sur une valeur inférieure à la valeur du couple du moteur (M_{M}),
- un signal correspondant à la distance (Δs) peut être comparé à un signal correspondant à une limite d'arrêt (s_{SG}),
- dans le cas où le signal correspondant à la distance (Δs) est plus petit ou égal au signal correspondant à la limite d'arrêt (s_{SG}) d'autres signaux de réglage peuvent être générés pour l'installation d'actionnement du frein et le couple du moteur (M_{M}), le couple de freinage (M_{Br}) et le couple du moteur (M_{M}) étant influencés de telle sorte que le couple de freinage (M_{Br}) dépasse le couple du moteur (M_{M}) .

12. Dispositif selon la revendication 11, **caractérisé en ce qu'**un capteur d'angle de direction est prévu pour déterminer l'angle de direction actuel, ainsi qu'un système de détection d'obstacles, des signaux de réglage pour le freinage et la direction pouvant être générés à partir des signaux générés par le capteur d'angle de direction et dans le système de détection d'obstacles en relation avec les signaux générés dans les installations pour déterminer la distance entre le véhicule et l'obstacle et pour déterminer la vitesse relative.
